# EUROPÄISCHE PATENTANMELDUNG

(11) **EP 4 438 505 A1**
(43) Veröffentlichungstag der Anmeldung: **02.10.2024**
(21) Anmeldenummer: 24162137.4
(22) Anmeldetag: 07.03.2024
(51) Int. Cl.: B65B 35/32, B65G 11/12, B65G 11/20, B65G 47/44, B65G 65/00

(54) **SORTIERENDSTELLE UND LOGISTIKSORTER**

(30) Priorität: 28.03.2023 DE 102023107764
(71) Anmelder: Deutsche Post AG, 53113 Bonn (DE)
(72) Erfinder: Knipper, Stefan, 33335 Gütersloh (DE); Loh, Hillar, 53859 Niederkassel (DE); Ahnert, Jan, 53757 Sankt Augustin, (DE)
(74) Vertreter: dompatent von Kreisler Selting Werner - Partnerschaft von Patent- und Rechtsanwälten mbB

(57) **Zusammenfassung**

Sortierendstelle für die Aufnahme von Sortiergut, insbesondere eines Logistiksorters, mit einer Rutsche (10) mit einem ersten Ende zur Aufnahme von Sortiergut und einem zweiten Ende, wobei sich eine Rutschfläche (11) von dem ersten Ende zum zweiten Ende erstreckt, einem Einfüllelement (14) verbunden mit dem zweiten Ende der Rutsche (10), wobei das Einfüllelement (14) von einer ersten Stellung in eine zweite Stellung verschwenkbar ist, wobei in der ersten Stellung eine Rutschfläche (24) durch das Einfüllelement (14) ausgebildet ist, so dass Sortiergut von der Rutsche (10) über das Einfüllelement (14) rutschen können insbesondere in einen Packsack (36), wobei in der zweiten Stellung die Rutschfläche (24) des Einfüllelements (14) das zweite Ende der Rutsche (10) blockiert, so dass kein Sortiergut von der Rutsche (10) über das Einfüllelement (14) rutschen kann.

## Beschreibung

Die vorliegende Erfindung betrifft eine Sortierendstelle für die Aufnahme von Sortiergut, insbesondere eines Logistiksorters. Weiterhin betrifft die vorliegende Erfindung einen Logistiksorter mit einer Vielzahl von solchen Sortierendstellen.

Heutige Logistiksorter zur Sortierung von Sortiergut wie beispielsweise Packstücken, Paketen, Briefen, Postsendungen oder dergleichen weisen üblicherweise ein oder mehrere aktive Förderelemente auf, über die das Sortiergut transportiert wird. Von dem aktiven Förderelement zweigen sodann eine Vielzahl von Sortierendstellen ab, welche üblicherweise als Rutschen ausgebildet sind. Über diese Rutschen rutscht das sortierte Sortiergut und fällt in dafür vorgesehene Packstückaufnahmen der Sortierendstellen, welche am Ende der jeweiligen Rutsche angebracht werden. Bei den Packstückaufnahmen kann es sich beispielsweise um Packsäcke, Abnahmetische oder dergleichen handeln.

Hierbei ergeben sich jedoch Probleme dadurch, dass das Sortiergut sehr inhomogen ausgebildet sein kann und somit einzelne Sortiergüter ein sehr unterschiedliches Gewicht aufweisen können. Auch können die Abmessungen der einzelnen Sortiergüter sehr unterschiedlich sein. Somit ist nicht für jedes Sortiergut sichergestellt, dass dieses unmittelbar in den dafür vorgesehenen Packsack gelangt. Das Sortiergut kann über den Packsack hinaus rutschen. Dies erfordert sodann eine manuelle und damit unter Umständen fehlerhafte Sortierung durch Personal. Bei schwerem Sortiergut kann hierdurch auch eine Verletzungsgefahr für das Personal resultieren. Auch kann sich das Sortiergut an der Einlassöffnung des Packsacks verkanten. Ein solcher Stau des Sortierguts muss sodann händisch durch das Personal aufgelöst werden. Auch hierdurch besteht die Gefahr, dass einzelnes Sortiergut nicht korrekt sortiert wird, weil es herunterfällt.

Weiterhin müssen die Packsäcke in regelmäßigen Abständen gewechselt werden, sobald diese einen gewissen Füllstand erreicht haben. Beim Wechseln der Packsäcke kann weiterhin Sortiergut über die Rutsche durch den Logistiksorter in die jeweilige Sortierendstelle abgeworfen werden. Dieses Sortiergut muss nach Einlegen eines neuen Packsacks händisch nachsortiert werden und in den korrekten, dafür vorgesehenen Packsack manuell einsortiert werden.

Aufgabe der vorliegenden Erfindung ist es, eine Sortierendstelle sowie einen Logistiksorter bereitzustellen zur Verbesserung des Stands der Technik.

Die Aufgabe wird gelöst durch eine Sortierendstelle gemäß Anspruch 1 sowie eine Logistiksorter gemäß Anspruch 14.

Die erfindungsgemäße Sortierendstellung für die Aufnahme von Sortiergut, insbesondere eines Logistiksorters, weist eine Rutsche auf mit einem ersten Ende zur Aufnahme von Sortiergut insbesondere von einem aktiven Förderelement des Logistiksorters und einem zweiten Ende, wobei sich eine Rutschfläche von dem ersten Ende zum zweiten Ende erstreckt. Somit kann das Sortiergut über die Rutschfläche von dem ersten Ende zum zweiten Ende gelangen. Insbesondere ist die Rutschfläche geneigt, sodass das Sortiergut aufgrund der Gewichtskraft vom ersten Ende zum zweiten Ende gelangt. Alternativ oder zusätzlich hierzu kann die Rutsche auch aktive Förderelemente aufweisen zur Unterstützung der Bewegung des Sortierguts.

Weiterhin weist die Sortierendstelle ein Einfüllelement auf, welches verbunden ist mit dem zweiten Ende der Rutsche. Dabei kann das Einfüllelement von einer ersten Stellung in eine zweite Stellung verschwenkt werden. In der ersten Stellung wird dabei durch das Einfüllelement eine Rutschfläche ausgebildet, sodass das Sortiergut von der Rutsche über die Rutschfläche des Einfüllelements rutschen kann und sodann zu einer Packstückaufnahme gelangt. Dabei kann die Rutschfläche des Einfüllelements bündig mit der Rutschfläche der Rutsche ausgebildet sein. Alternativ hierzu kann die Rutschfläche des Einfüllelements unterhalb der Rutschfläche der Rutsche angeordnet sein, sodass das Sortiergut von der Rutsche auf die Rutschfläche des Einfüllelements fällt und von diesem zu der Packstückaufnahme gelangt.

Insbesondere kann es sich dabei bei der Packstückaufnahme um einen Packsack handeln, in den das Sortiergut über das Einfüllelement eingefüllt wird. Alternativ hierzu kann es sich bei der Packstückaufnahme um eine Kiste, einen Förderwagen, einen Container oder dergleichen handeln. Alternativ gelangt das Sortiergut über das Einfüllelement auf einen Abnahmetisch, wobei das Sortiergut über die Rutschfläche des Einfüllelements auf den Abnahmetisch rutschen kann. Alternativ hierzu handelt es sich bei der Packstückaufnahme um ein weiteres Förderelement, so dass das Sortiergut über das Einfüllelement in eine Aufnahme des weiteren Förderelements gelangt und sodann durch dieses weitertransportiert werden kann.

Erfindungsgemäß blockiert in der zweiten Stellung die Rutschfläche des Einfüllelements das zweite Ende der Rutsche, sodass kein Sortiergut von der Rutsche über das Einfüllelement rutschen kann, solange das Einfüllelement in der zweiten Stellung ist. Somit kann das Sortiergut in einer ersten Stellung des Einfüllelements beispielsweise in einen Packsack gefüllt werden. Ist der Packsack voll und muss getauscht, wird das Einfüllelement in die zweite Stellung gebracht, sodass das zweite Ende der Rutsche durch das Einfüllelement blockiert ist. Nachrutschendes Sortiergut wird somit von dem Einfüllelement auf der Rutsche gestoppt und kann nicht unbeabsichtigt aus der Sortierendstelle herausfallen. Sobald der Packsack gewechselt ist und ein neuer Packsack in die Sortierendstelle eingespannt ist, kann das Einfüllelement wieder in die erste Stellung gebracht werden, sodass das Sortiergut von der Rutsche über das Einfüllelement in den Packsack gelangen kann. Hierdurch ist ein manuelles Nachsortieren von Sortiergut, welches während dem Wechsel des Packsacks herausfällt, nicht mehr erforderlich.

Vorzugsweise handelt es sich bei dem Sortiergut um Packstücke, Pakete, Briefe, Postsendungen oder dergleichen. Insbesondere ist jedoch die vorliegende Erfindung nicht auf das Sortiergut beschränkt. Bevorzugt ist jedoch das Sortiergut inhomogenen, sodass sich das Sortiergut in seinem Gewicht und/oder seinen Abmessungen unterscheidet.

Vorzugsweise ist das Einfüllelement um eine Schwenkachse von einer ersten Stellung in eine zweite Stellung verschwenkbar.

Vorzugsweise ist die Schwenkachse des Einfüllelements horizontal angeordnet. Hierbei kann die erste Stellung des Einfüllelements einer im Wesentlichen horizontalen Orientierung des Einfüllelements entsprechen, wohingegen das Einfüllelement zur Verbringung in die zweite Stellung hochgeklappt werden kann in eine zu der horizontalen gewinkelten Stellung und insbesondere einer vertikalen Stellung.

Vorzugsweise ist die Schwenkachse des Einfüllelements senkrecht angeordnet zur Rutschrichtung. Insbesondere um das Einfüllelement gegen das zweite Ende der Rutsche zu verschwenken, um dieses zu blockieren, ist die Schwenkachse des Einfüllelements senkrecht zu der Rutschrichtung angeordnet, sodass in der zweiten Stellung das Einfüllelement gegen die Rutsche verschwenkt werden kann.

Vorzugsweise schließt das Einfüllelement in der zweiten Stellung das zweite Ende der Rutsche bündig bzw. formschlüssig ab. Somit kann bei einem Einfüllelement in der zweiten Stellung kein Sortiergut aus der Rutsche der Sortierendstellung herausfallen.

Vorzugsweise ist die Rutschfläche des Einfüllelements in der zweiten Stellung gewinkelt zu der Rutschfläche der Rutsche angeordnet. Hierdurch wird eine gemeinsame Rutschfläche der Rutsche und des Einfüllelements unterbrochen.

Durch die gewinkelte Stellung der Rutschfläche des Einfüllelements wird das zweite Ende der Rutsche blockiert, um ein Nachrutschen von Sortiergut in der zweiten Stellung des Einfüllelements zu verhindern. Insbesondere kann hierzu die Rutschfläche des Einfüllelements senkrecht oder im Wesentlichen senkrecht angeordnet sein zu der Rutschfläche der Rutsche.

Vorzugsweise weist das Einfüllelement einen Trichter auf mit einer Öffnung. Durch den Trichter kann das Einsortieren bzw. Einfüllen des Sortierguts beispielsweise in einen Packsack verbessert werden. Insbesondere wenn es sich bei der Packstückaufnahme um einen Packsack, eine Kiste, einen Förderwagen, einen Container oder dergleichen handelt, kann ein Trichter vorgesehen sein, so dass ein sicheres Einfüllen des Sortierguts erfolgen kann. Ein Verkanten von Sortiergut beispielsweise an der Einlassöffnung des Packsacks kann somit verhindert werden. Durch die Öffnung kann das Sortiergut nach unten insbesondere in den Packsack fallen. Hierzu wird durch den Trichter das Sortiergut geeignet geleitet.

Vorzugsweise deckt der Trichter vollständig eine Einlassöffnung des Packsacks ab. Der Trichter weist somit eine Fläche auf, die insbesondere größer oder gleichgroß ist wie die Einlassöffnung des Packsacks. Insbesondere ist die Öffnung des Trichters kleiner oder gleichgroß wie die Einlassöffnung des Packsacks, sodass das Sortiergut durch die Öffnung zuverlässig in den Packsack gelangt.

Vorzugsweise weist das Einfüllelement eine Prallfläche auf, welche in der ersten Stellung des Einfüllelements gegenüber dem zweiten Ende der Rutsche angeordnet ist. Hierbei ragt die Prallfläche insbesondere um eine Höhe von mehr als 100 mm und bevorzugt mehr als 300 mm auf, insbesondere relativ zu einer Horizontalen definiert durch das zweite Ende der Rutsche. Durch die Prallfläche kann Sortiergut, welches über die Öffnung des Packsacks bzw. des Trichters hinaus rutscht, abgefangen und gestoppt werden, sodass dieses Sortiergut in den Packsack geleitet wird. Somit kann verhindert werden, dass das Sortiergut über den Rand des Packsacks hinausrutscht und aus der Sortierendstelle fällt. Manuelles Nachsortieren dieses Sortierguts wird somit verhindert, wodurch Fehler in der Sortierung reduziert werden können und die für die Nachsortierung erforderliche Zeit eingespart werden kann.

Vorzugsweise weist die Sortierendstelle einen Bügel auf zur Befestigung eines Packsacks. Dabei ist die Stellung des Bügels unabhängig von der Stellung des Einfüllelements. Insbesondere ist die Stellung des Bügels festgelegt. Somit kann zum Einlegen eines Packsacks das Einfüllelement von der ersten Stellung in die zweite Stellung gebracht werden. Hierdurch wird gleichzeitig der Bügel freigelegt. Insbesondere ist hierzu der Bügel unterhalb des Einfüllelements in der ersten Stellung angeordnet. Sodann kann der Packsack gewechselt werden und nachfolgend das Einfüllelement von der zweiten Stellung in die erste Stellung zurückgebracht werden.

Vorzugsweise erfolgt eine klemmende Befestigung des Packsacks am Bügel durch das Einfüllelement. Hierzu gelangt die Unterseite des Einfüllelements in Eingriff mit dem Bügel, wobei die Öffnung des Packsacks zwischen dem Bügel und dem Einfüllelement fixiert wird. Hierdurch wird ein unbeabsichtigtes Herausrutschen des Packsacks und insbesondere ein Lösen vom Bügel verhindert.

Vorzugsweise weist die Sortierendstelle einen oder mehrere Sensoren auf zur Erfassung von einem oder mehreren eines Füllstands, der Stellung des Einfüllelements und einer Anwesenheit des Packsacks. So kann beispielsweise ein Sensor vorgesehen sein zur Erfassung des Füllstands des Packsacks, ein weiterer Sensor vorgesehen sein zur Erfassung der Stellung des Einfüllelements und ein weiterer Sensor vorgesehen sein für die Erfassung der Anwesenheit des Packsacks. Alternativ hierzu können einzelne Sensoren mehrere dieser Zustände gleichzeitig erfassen, sodass beispielsweise ein gemeinsamer Sensor vorgesehen sein kann zur Erfassung des Füllstands des Packsacks sowie der Anwesenheit des Packsacks.

Vorzugsweise ist ein Sensor zur Erfassung des Füllstands des Packsacks und/oder der Anwesenheit des Packsacks in bzw. an dem Einfüllelement angeordnet. Insbesondere ist der Sensor an der Unterseite des Einfüllelements angeordnet und weist in Richtung des Packsacks. Hierdurch ist auf einfache Weise eine Erfassung beispielsweise des Füllstands und/oder der Anwesenheit des Packsacks möglich. Insbesondere handelt es sich bei dem Sensor um eine Infrarotsensor, einen Ultraschallsensor und/oder einen optischen Sensor.

Vorzugsweise ist ein Ausgleichselement vorgesehen, wobei das Ausgleichselement eine Kraft auf das Einfüllelement aufbringt, um das ein Einfüllelement von der ersten Stellung in die zweite Stellung oder andersherum zu bewegen. Hierbei kann es sich bei dem Ausgleichselement beispielsweise um eine Feder, einen Luftzylinder, ein Gummiband, Gegengewichte oder dergleichen handeln. Durch das Ausgleichselement wird insbesondere die Gewichtskraft des Einfüllelements im Wesentlichen kompensiert. Im Wesentlichen bedeutet hierbei, dass eine Bewegung des Einfüllelements durch eine Person auf einfacher Weise möglich ist. Insbesondere bei einer horizontal angeordneten Schwenkachse des Einfüllelements ist es somit nicht erforderlich, durch die Person die gesamte Gewichtskraft aufzubringen, um das Einfüllelement von der ersten Stellung in die zweite Stellung zu bewegen. Gleichzeitig wird durch das Ausgleichselement sichergestellt, dass ein Herunterfallen des Einfüllelements von der zweiten Stellung in die erste Stellung in jedem Fall gedämpft wird, um hierdurch beispielsweise Verletzungen oder dergleichen zu verhindern. Die Bewegung von der zweiten Stellung in die erste Stellung kann hierbei durch das Ausgleichselement ausreichend gebremst werden, sodass Zeit besteht, geeignet zu reagieren und Verletzungen zu verhindern.

Vorzugsweise weist das Einfüllelement eine Arretierung in der ersten Stellung und/oder in der zweiten Stellung auf. Hierdurch kann das Einfüllelement in der ersten Stellung und/oder der zweiten Stellung arretiert werden, sodass ein unbeabsichtigtes Verschwenken des Einfüllelements entweder von der ersten Stellung in die zweite Stellung oder von der zweiten Stellung in die erste Stellung verhindert wird. Bei einer Arretierung in der ersten Stellung wird beispielsweise ein unbeabsichtigtes Anheben des Einfüllelements bei gleichzeitiger Sortierung des Sortierguts verhindert. Hierdurch wird verhindert, dass Sortiergut nicht in den Packsack gelangt, sondern aus der Sortierendstelle herausfällt, da stets sichergestellt wird, dass das Sortiergut über das Einfüllelement in den Packsack gelangt. Bei einer Arretierung in der zweiten Stellung wird sichergestellt, dass das Einfüllelement bei beispielsweise einem Wechsel des Packsacks nicht unbeabsichtigt herunterfällt, wodurch eine Gefährdung des Personals bestehen würde. Insbesondere kann hierbei die Arretierung manuell lösbar sein, sodass die Arretierung in der ersten Stellung und/oder in der zweiten Stellung manuell durch das Personal gelöst werden kann, um das Einfüllelement von der ersten Stellung in die zweite Stellung zu bringen oder andersherum. Alternativ hierzu kann die Arretierung automatisch gelöst werden beispielsweise bei Erfassung, ob ein Packsack vorhanden ist oder der Füllstand sich einer vorgegebenen Grenze nähert. Ist somit der Wechsel des Packsacks abgeschlossen, wird dies beispielsweise von einem Sensor erfasst, wodurch eine Arretierung des Einfüllelements in der zweiten Stellung gelöst wird und das Einfüllelement wieder von der zweiten Stellung in die erste Stellung gebracht werden kann.

Vorzugsweise weist das Einfüllelement eine Vielzahl von Zwischenarretierungen auf in Stellungen, welche zwischen der ersten Stellung und der zweiten Stellung liegen. Hierdurch kann das Einfüllelement in unterschiedlichen Stellungen gehalten werden. Insbesondere bei einem unbeabsichtigten Lösen der Arretierung in der zweiten Stellung, wird ein Herunterfallen des Einfüllelements gerade verhindert, da das Einfüllelement nur bis zur nächsten Zwischenarretierung bewegt werden kann.

Vorzugsweise wird durch die Rutsche und das Einfüllelement in der ersten Stellung eine unterbrechungsfreie Rutschfläche ausgebildet, sodass das Sortiergut zuverlässig weitergeleitet werden kann und insbesondere in den Packsack gelangt.

Vorzugsweise erstreckt sich das Einfüllelement teilweise unter der Rutsche insbesondere in Richtung des ersten Endes der Rutsche. Hierdurch wird eine gemeinsame Anlagefläche zwischen der Unterseite der Rutsche und der Oberseite des Einfüllelements geschaffen. Auf Grund dieser Anlagefläche kann eine Kraftübertragung erfolgen, sodass das Einfüllelement in der ersten Stellung gehalten wird. Gleichzeitig kann die Oberfläche des Einfüllelements vergrößert werden, sodass ein zuverlässiges Blockieren des zweiten Endes der Rutsche sichergestellt wird, sofern das Einfüllelement in die zweite Stellung gebracht wird.

Vorzugsweise ist eine Schwenkachse des Einfüllelements vor dem zweiten Ende der Rutsche angeordnet, also in Richtung der Bewegung des Sortierguts vor dem zweiten Ende bzw. in Richtung des ersten Endes. Alternativ hierzu ist die Schwenkachse unmittelbar unter dem zweiten Ende der Rutsche angeordnet, so dass die Schwenkachse und das zweite Ende auf einer gemeinsamen vertikalen Achse liegen. Hierdurch wird sichergestellt, dass das zweite Ende der Rutsche durch das Einfüllelement sicher blockiert wird und ein unbeabsichtigtes Nachrutschen von Sortiergut, während das Einfüllelement in der zweiten Stellung ist, verhindert wird.

Weiterhin betrifft die vorliegende Erfindung einen Logistiksorter zur Sortierung von Sortiergut mit mindestens einem aktiven Förderelement und mindestens einer und insbesondere einer Vielzahl von Sortierendstellen, welche von dem aktiven Förderelement abzweigen. Dabei sind die Sortierendstellen weitergebildet wie vorstehend beschrieben. Bei dem aktiven Förderelement kann es sich beispielsweise um ein Förderband handeln. Die vorliegende Erfindung ist jedoch nicht auf die Ausgestaltung des aktiven Förderelements beschränkt, sodass beispielsweise auch Rollenförderer oder Kugelförderer mitumfasst sind. Insbesondere zweigen die Sortierendstellen in einen Winkel von dem aktiven Förderelement ab, wobei der Winkel zwischen der Förderrichtung des aktiven Förderelements und der Rutschrichtung der jeweiligen Sortierendstellung 30 bis 90° beträgt.

Vorzugsweise zweigen Sortierendstellen auf beiden Seiten des aktiven Förderelements ab.

Vorzugsweise sind alle Sortierendstellen identisch ausgebildet. Alternativ hierzu sind mindestens zwei Sortierendstellen unterschiedlich ausgebildet.

Nachfolgend wir die Erfindung anhand bevorzugter Ausführungsformen unter Bezugnahme auf die beigefügten Zeichnungen näher erläutert.

Es zeigen:
Figuren 1A, 1B eine Ausführungsform der vorliegenden Erfindung in einer ersten Stellung und
Figur 2A, 2B die Ausführungsform der Figuren 1A und 1B in einer zweiten Stellung.

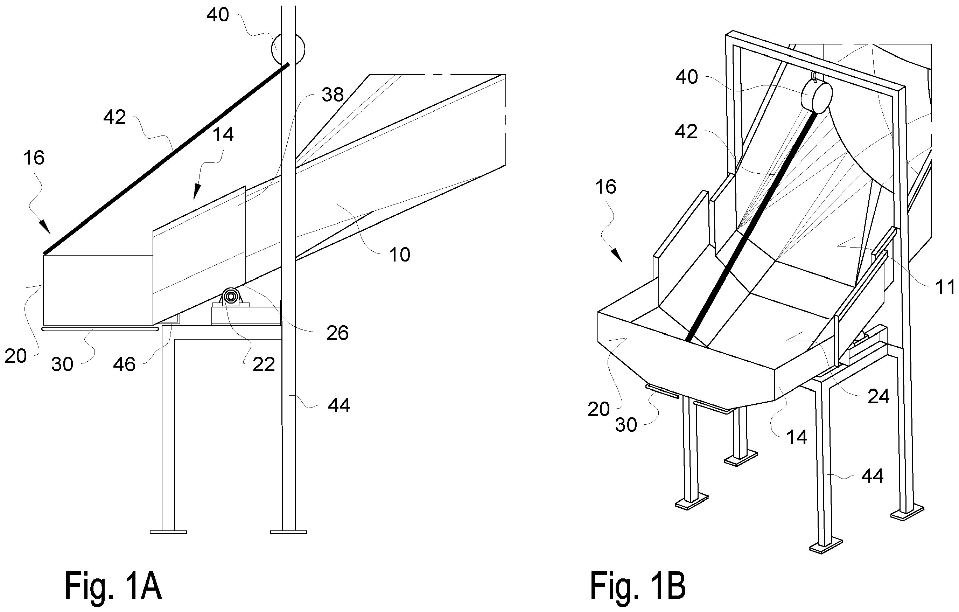

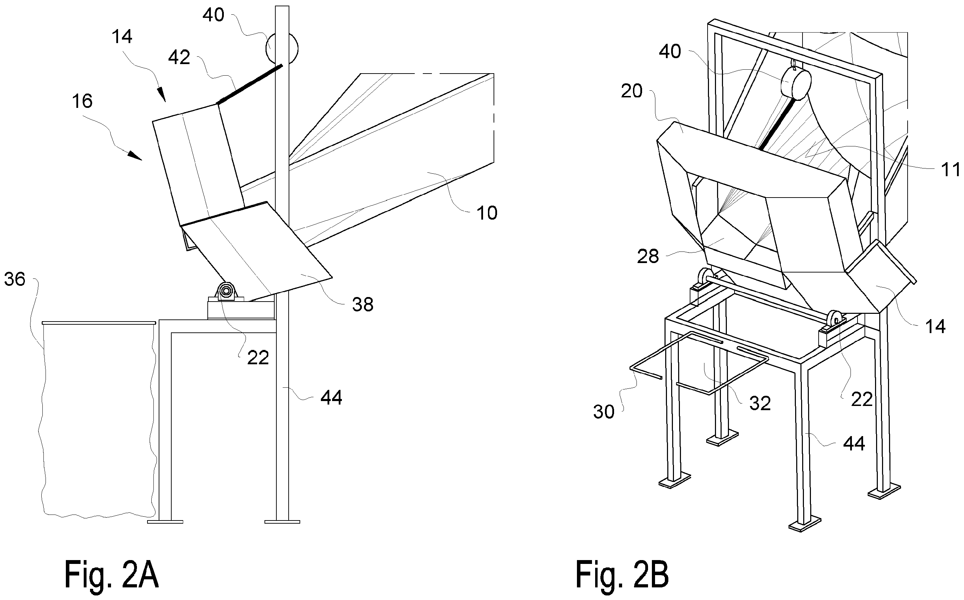

Eine Sortierendstelle für die Aufnahme von Sortiergut insbesondere eines Logistiksorters gemäß der vorliegenden Erfindung ist in den Figuren 1A, 1B sowie 2A und 2B zeigt. Die Sortierendstelle weist eine Rutsche 10 auf, durch die eine Rutschfläche 11 ausgebildet wird. Die Rutsche 10 weist ein erstes Ende (nicht dargestellt) auf zur Aufnahme eines Sortierguts. Weiterhin weist die Rutsche 10 ein zweites Ende auf, welches das untere Ende der Rutsche 10 darstellt. Die Rutsche ist hierbei geneigt gegenüber einer Horizontalen, sodass eine Förderung des Sortierguts aufgrund der Gewichtskraft erfolgt. Auch wenn die Rutsche 10 gemäß den Figuren lediglich eine Rutschfläche 11 aufweist, so können auch Rollenförderer, Kugelförderer oder andere Förderelemente vorgesehen sein, welche beispielsweise aktiv oder passiv ausgebildet sind, zur Unterstützung der Bewegung des Sortierguts entlang der Rutsche 10.

Mit dem zweiten Ende der Rutsche 10 ist ein Einfüllelement 14 verbunden. Dabei ist das Einfüllelement 14 um eine Schwenkachse 22 verschwenkbar von einer ersten Stellung, welche gezeigt ist in den Figuren 1A, 1B, in eine zweite Stellung gezeigt in den Figuren 2A, 2B. Durch das Einfüllelement 14 wird eine Rutschfläche 24 ausgebildet, welche in der ersten Stellung bündig ist mit der Rutschfläche 11 der Rutsche 10. Sortiergut kann somit ohne Behinderung von der Rutsche 10 zu dem Einfüllelement 14 gelangen. Weiterhin weist das Einfüllelement 14 einen Trichter 16 auf. Der Trichter 16 weist eine Öffnung 28 (gezeigt in Figur 2B) auf, durch die Sortiergut nach unten fallen kann. Unterhalb der Öffnung 28 weist die Sortierendstelle einen Bügel 30 auf, wobei mit dem Bügel 30 ein Packsack 36 verbunden sein kann. Durch den Bügel 30 wird eine Öffnung 32 ausgebildet, welche der Einfüllöffnung bzw. Einlassöffnung des Packsacks 36 entspricht. Die Öffnung 28 des Trichters 16 liegt unmittelbar über der Öffnung 32 des Bügels 30, wenn sich das Einfüllelement 14 in der ersten Stellung befindet. Sortiergut kann somit von der Rutsche 10 über die Rutschfläche 24 des Einfüllelements in den Trichter 16 gelangen und sodann durch die Öffnung 28 in den Packsack 36 fallen. Auf Grund des Trichters 16 wird ein Verkanten des Sortierguts beim Einfüllen in den Packsack reduziert. Weiterhin weist das Einfüllelement 14 eine Prallfläche 20 auf, welche gegenüber dem zweiten Ende der Rutsch 10 angeordnet ist. Sortiergut, welches über die Öffnung 28 des Trichters 16 hinausrutscht, prallt gegen die Prallfläche 20 und wird hierdurch gestoppt. Ein Herausfallen aus der Sortierendstelle wird durch die Prallfläche 20 gerade verhindert, sodass ein Nachsortieren dieser Sortiergüter entfällt.

Das Einfüllelement 14 ist dabei an einem Rahmen 44 befestigt insbesondere über die Schwenkachse 22. Weiterhin wird durch den Rahmen 44 und eine Anlagefläche 46 das Einfüllelement 14 in der ersten Stellung gehalten. Andere Aufhängungen des Einfüllelements 14 sind selbstverständlich ebenfalls möglich. Die vorliegende Erfindung ist nicht auf die in den Figuren gezeigte Ausgestaltung des Rahmens 44 beschränkt. Weiterhin erstreckt sich ein Abschnitt 26 des Einfüllelements 14 unterhalb der Rutsche 10 und gelangt mit der Unterseite der Rutsche 10 in Anlage, sodass eine bündige gemeinsame Rutschfläche der Rutsche 10 und des Einfüllelements 14 gewährleistet ist. Weiterhin erstreck sich eine Seitenwand 38 des Einfüllelements 14 in Richtung des ersten Endes und liegt an der Außenseite der Rutsche 10 an, wenn das Einfüllelement 14 in der ersten Stellung ist. Insbesondere weist das Einfüllelement 14 einen Einlass auf, der mit dem zweiten Ende verbunden ist, wobei ein Schnittprofil des Einlasses des Einfüllelements 14 im Wesentlichen einem Schnittprofil des zweiten Endes der Rutsche 10 entspricht. Im Wesentlichen bedeutet hierbei, dass die Abmessungen sich lediglich geringfügig unterscheiden, insbesondere um ein Anliegen des Einlasses des Einfüllelements 14 an die Außenseite der Rutsche 10 im Bereich des zweiten Endes zu ermöglichen. Hierdurch wird ein nahezu übergangsfreier Anschluss des Einfüllelements 14 an die Rutsche 10 ermöglicht.

Weiterhin ist in der Ausführungsform der Figuren die Schwenkachse 22 unmittelbar unterhalb des zweiten Endes der Rutsche 10 angeordnet. Das zweite Ende der Rutsche 10 und die Schwenkachse 22 liegen somit auf einer gemeinsamen vertikalen Achse. Hierdurch wird sichergestellt, dass bei einem Verschwenken des Einfüllelements 14 von der ersten Stellung in die zweite Stellung die Rutschfläche 24 lückenlos das zweite Ende der Rutsche 10 verschließt bzw. blockiert. Wird das Einfüllelement 14 in die zweite Stellung verschwenkt, gezeigt in den Figuren 2A und 2B, so ist die Rutschfläche 24 des Einfüllelements 14 in einem Winkel zu der Rutschfläche 11 der Rutsche 10 angeordnet, sodass Sortiergut durch die gewinkelte Rutschfläche 24 des Einfüllelements gestoppt wird. Ein Herausfallen des Sortierguts aus der Sortierendstelle wird hierbei vermieden. Insbesondere ragt hierzu die Rutschfläche 24 des Einfüllelements 14 mehr als 100 mm und insbesondere mehr als 200 mm senkrecht über die Rutschfläche 11 der Rutsche 10 hinaus. Somit kann ein sicheres Blockieren der Rutsche 10 gewährleistet werden und ein unbeabsichtigtes Herausfallen des Sortierguts durch das Einfüllelement 14 in der zweiten Stellung verhindert werden.

Vorzugsweise ist mit dem Rahmenelement 44 ein Ausgleichselement 40 verbunden, welches in dem Beispiel der Ausführungsform der Figuren mit einem Verbindungselement 42, wie beispielsweise einem Seilzug, mit dem Einfüllelement 14 verbunden ist. Das Ausgleichselement 40 kann hierbei als Feder, Luftdämpfer, Gegengewicht oder dergleichen ausgebildet sein. Durch das Ausgleichselement 40 wird über das Verbindungelement 42 die Gewichtskraft des Einfüllelements 14 im Wesentlichen kompensiert, sodass ein unbeabsichtigtes Herunterfallen des Einfüllelements 14 von der zweiten Stellung in die erste Stellung verhindert oder zumindest gebremst wird. Gleichzeitig kann Personal bei dem Verschwenken des Einfüllelements 14 von der ersten Stellung in die zweite Stellung durch das Ausgleichselement 40 unterstützt werden, sodass es nicht erforderlich ist die gesamte Gewichtskraft des Einfüllelements 14 aufzubringen.

Ein mögliches Verfahren zum Wechseln eines Packsacks umfasst somit die folgenden Schritte:
a) Verschwenken des Einfüllelements 14 von einer ersten Stellung in eine zweite Stellung und hierdurch gleichzeitiges Blockieren des zweiten Endes der Rutsche 10.
b) Wechseln einer Packstückaufnahme wie beispielsweise eines Packsacks insbesondere durch Lösen des Packsacks von einem Bügel 30 und Einspannen eines neuen Packsacks in den Bügel 30.
c) Verschwenken des Einfüllelements 14 von der zweiten Stellung in die erste Stellung, wodurch das zweite Ende der Rutsche 10 freigegeben wird und Sortiergut über die Rutschfläche 11 der Rutsche 10 und die Rutschfläche 24 des Einfüllelements 14 in den Packsack 36 gelangen kann.

Somit wird durch die vorliegende Erfindung eine Sortierendstelle geschaffen, welche auf einfache Weise das sichere Befüllen von Packsäcken mit Sortiergut ermöglicht. Dies wird insbesondere auch während der Zeit eines Wechsels des Packsacks sichergestellt, wodurch ein manuelles Nachsortieren von herausfallendem Sortiergut oder eine Gefährdung des Personals ausgeschlossen wird.

### Bezugszeichenliste

10 Rutsche
11 Rutschfläche
14 Einfüllelement
16 Trichter
20 Prallfläche
22 Schwenkachse
24 Rutschfläche
26 Abschnitt
28 Öffnung
30 Bügel
32 Öffnung
36 Packsack
38 Seitenwand
40 Ausgleichselement
42 Verbindungselement
44 Rahmen
46 Anlagefläche

## Patentansprüche

1. Sortierendstelle für die Aufnahme von Sortiergut, insbesondere eines Logistiksorters, mit
einer Rutsche (10) mit einem ersten Ende zur Aufnahme von Sortiergut und einem zweiten Ende, wobei sich eine Rutschfläche (11) von dem ersten Ende zum zweiten Ende erstreckt,
einem Einfüllelement (14) verbunden mit dem zweiten Ende der Rutsche (10), wobei das Einfüllelement (14) von einer ersten Stellung in eine zweite Stellung verschwenkbar ist,
wobei in der ersten Stellung eine Rutschfläche (24) durch das Einfüllelement (14) ausgebildet ist, so dass Sortiergut von der Rutsche (10) über das Einfüllelement (14) rutschen können, insbesondere in eine Packstückaufnahme ,
wobei in der zweiten Stellung die Rutschfläche (24) des Einfüllelements (14) das zweite Ende der Rutsche (10) blockiert, so dass kein Sortiergut von der Rutsche (10) über das Einfüllelement (14) rutschen kann.

2. Sortierendstelle nach Anspruch 1, **dadurch gekennzeichnet, dass** eine Schwenkachse (22) des Einfüllelements (14) horizontal angeordnet ist.

3. Sortierendstelle nach Anspruch 1 oder 2, **dadurch gekennzeichnet, dass** eine Schwenkachse (22) des Einfüllelements (14) senkrecht angeordnet ist zur Rutschrichtung.

4. Sortierendstelle nach einem der Ansprüche 1 bis 3, **dadurch gekennzeichnet, dass** die Rutschfläche (24) des Einfüllelements in der zweiten Stellung gewinkelt zu der Rutschfläche (11) der Rutsche (10) angeordnet ist.

5. Sortierendstelle nach einem der Ansprüche 1 bis 4, **dadurch gekennzeichnet, dass** das Einfüllelement (14) einen Trichter (16) aufweist mit einer Öffnung (28) insbesondere in den Packsack (36).

6. Sortierendstelle nach einem der Ansprüche 1 bis 5, **dadurch gekennzeichnet, dass** das Einfüllelement (14) eine Prallfläche (20) aufweist gegenüber dem zweiten Ende der Rutsche (10), wobei die Prallfläche (20) insbesondere eine Höhe von mehr als 100mm und bevorzugt mehr als 300mm aufweist.

7. Sortierendstelle nach einem der Ansprüche 1 bis 6, **gekennzeichnet durch** einen Bügel (30) zur Befestigung eines Packsacks (36), wobei eine Stellung des Bügels (30) unabhängig ist von der Stellung des Einfüllelements (14).

8. Sortierendstelle nach einem der Ansprüche 1 bis 7, **dadurch gekennzeichnet, dass** ein oder mehrere Sensoren vorgesehen sind zur Erfassung von einem oder mehreren eines Füllstands, der Stellung des Einfüllelements (14), einer Anwesenheit des Packsacks (36).

9. Sortierendstelle nach einem der Ansprüche 1 bis 8, **dadurch gekennzeichnet, dass** ein Ausgleichselement (40) vorgesehen ist, wobei das Ausgleichselement (40) eine Kraft aufbringt, um das Einfüllelement (14) von der ersten Stellung in die zweite Stellung zu bewegen oder andersherum.

10. Sortierendstelle nach einem der Ansprüche 1 bis 9, **dadurch gekennzeichnet, dass** das Einfüllelement (14) eine Arretierung in der ersten Stellung und/oder zweiten Stellung aufweist.

11. Sortierendstelle nach einem der Ansprüche 1 bis 10, **dadurch gekennzeichnet, dass** in der ersten Stellung durch die Rutsche (10) und das Einfüllelement (14) eine unterbrechungsfreie Rutschfläche ausgebildet ist.

12. Sortierendstelle nach einem der Ansprüche 1 bis 11, **dadurch gekennzeichnet, dass** sich das Einfüllelement (14) teilweise unterhalb der Rutsche (10) erstreckt.

13. Sortierendstelle nach einem der Ansprüche 1 bis 12, **dadurch gekennzeichnet, dass** eine Schwenkachse (22) des Einfüllelements vor dem zweiten Ende angeordnet ist oder mit dem zweiten Ende zusammenfällt.

14. Logistiksorter zur Sortierung von Sortiergut mit mindestens einem aktiven Förderelement und mindestens einer und insbesondere einer Vielzahl von Sortierendstellen nach einem der Ansprüche 1 bis 13, welche von dem aktiven Förderelement abzweigen.
